# FASCICULE DE BREVET EUROPEEN

(11) **EP 2 259 913 B1**
(45) Date de publication et mention de la délivrance du brevet: **29.06.2016**
(21) Numéro de dépôt: 09722662.5
(22) Date de dépôt: 05.03.2009
(51) Int. Cl.: B29C 70/34, B29C 70/32, B29C 33/40, B29C 70/44, B29L 31/30

(54) **PROCÉDÉ ET DISPOSITIF DE MOULAGE D'UNE PIÈCE COURBE EN MATÉRIAU COMPOSITE**
VERFAHREN UND VORRICHTUNG ZUM FORMEN EINES GEBOGENEN BAUTEILS AUS VERBUNDMATERIAL
METHOD AND DEVICE FOR MOULDING A CURVED PART MADE FROM COMPOSITE MATERIAL

(30) Priorité: 07.03.2008 FR 0801260
(43) Date de publication de la demande: 15.12.2010
(73) Titulaire: Airbus, 31700 Blagnac (FR)
(72) Inventeur: DUQUEINE, Gilles, F-69270 Fontaines sur Saone (FR); AUBRY, Jérôme, F-38118 Saint Baudille de la Tour (FR)
(74) Mandataire: Gicquel, Olivier Yves Gérard
(86) Numéro de dépôt international: PCT/FR2009/050359
(87) Numéro de publication internationale: WO 2009/115736

(56) Documents cités:
- FR-A- 2 766 407
- US-A1- 2007 029 038

## Description

La présente invention concerne un procédé de moulage d'une pièce courbe en matériau composite, notamment d'une pièce présentant une section transversale formant un angle, par exemple en forme de Ω, de U, de Z, de C ou de V.

Elle concerne également un dispositif de moulage d'une telle pièce présentant un rayon de courbure non nul, ainsi que les pièces courbes correspondantes.

Elle trouve une application particulièrement importante bien que non exclusive dans le domaine des profils en matériaux composites utilisés dans l'aéronautique, pour la réalisation de pièces de série par exemple pour carlingues d'avion.

Mais elle peut être également utilisée dans d'autres domaines nécessitant une bonne résistance aux efforts notamment dans tous domaines industriels et/ou dans celui du sport.

On connaît déjà des procédés et dispositifs de fabrication de profil courbe en matériau composite ,comme par exemple FR2766407 A1 et US2007029038 A1.

Certains sont obtenus par drapage progressif de tissus imprégnés à la main et/ou en cas de construction d'éléments de série, par un drapage fil à fil par robots permettant de placer les fils de façon précise, afin d'optimiser les caractéristiques de modules d'élasticité et de résistance.

De telles solutions présentent des inconvénients.

Elles nécessitent des automates, spécifiques et complexes, c'est à dire des investissements onéreux, et cela pour une productivité faible du fait de cadences nécessairement réduites seules autorisées par de tels dispositifs.

L'homogénéité relativement mauvaise dans l'ouverture en éventail des fibres utilisées entraîne par ailleurs des performances mécaniques médiocres.

La présente invention vise à fournir un procédé et un dispositif répondant mieux que ceux antérieurement connus aux exigences de la pratique, notamment en ce qu'elle autorise l'obtention de telles pièces en matériau composite présentant des modules et une résistance exceptionnelle à partir d'un drapage homogène, sans coût excessif, l'excellent résultat au niveau du drapage autorisant l'amélioration des performances mécaniques du produit final en le rendant plus homogène et ce, de façon répétitive et simple à mettre en oeuvre.

Dans ce but la présente invention propose essentiellement un procédé de moulage d'une pièce courbe en matériau composite, caractérisé en ce que, à partir d'au moins une bande composite s'étendant le long d'un axe longitudinal formée d'au moins deux nappes en fibres de renfort unidirectionnelles disposées selon des orientations différentes de l'axe longitudinal, les nappes étant pré imprégnées de résine et pré compactées l'une avec l'autre à une pression et une température déterminées,
on applique longitudinalement la bande sur un mandrin souple en silicone, par compactage sous vide à une deuxième température, pour lui donner la forme déterminée du mandrin,
on dépose ladite bande ainsi obtenue sur un outillage métallique chauffé présentant en courbe la forme complémentaire du mandrin et formant le noyau d'un moule de mise en pression et température, pour donner à la bande la forme de la pièce courbe recherchée, en enroulant le mandrin souple au fur et à mesure,
on retire le mandrin souple une fois la bande déposée en totalité,
puis on met en pression et en température le moule sur l'ensemble ainsi obtenu pour polymérisation,
et on extrait la pièce ainsi formée après refroidissement.

Avantageusement la pièce présente une section transversale formant un angle.

Par mandrin souple, on entend un mandrin déformable entre une position rectiligne et une position courbe, mais de section transversale rigide ou sensiblement rigide permettant d'obtenir la forme de la pièce en section transversale.

Dans des modes de réalisation avantageux on a de plus recours à l'une et/ou à l'autre des dispositions suivantes :
- les fibres unidirectionnelles d'au moins deux des nappes sont symétriques par rapport à l'axe de la bande ;
- on forme la bande composite à partir de trois nappes superposées et agglomérées par compactage l'une à l'autre, les fibres parallèles de chacune des nappes formant un angle avec l'axe de la bande respectivement de valeur 90°-a°, 90°, 90°+a°, a variant par exemple de 10° à 80°.

Dans d'autres variantes, les angles peuvent être de 90°-a / 90°+b / 90°+a / 90°+b, symétriques ou non autour de 90°, ou encore des angles d'autres valeurs imposées par la recherche de la meilleure résistance et/ou d'une élasticité spécifique, en fonction des contraintes prévues sur la pièce ;
- la pièce étant réalisée à partir d'au moins deux bandes composites en fibres de renfort, à savoir une première bande et une deuxième bande, formées respectivement sur un premier mandrin souple en silicone et sur un deuxième mandrin souple en silicone, et après dépose de la première bande sur ledit outillage et retrait du premier mandrin en silicone, on dépose la deuxième bande sur la première bande en enroulant à son tour le deuxième mandrin souple au fur et à mesure, avant de retirer le deuxième mandrin,
puis on met en pression et température pour moulage de la pièce courbe en matériau composite ainsi formée par le sandwich de ces deux bandes.

Le deuxième mandrin est identique au premier mandrin et/ou de forme telle que la deuxième bande vienne s'appliquer comme souhaité sur la première bande, après démoulage dudit deuxième mandrin.
- on intercale entre deux bandes et/ou on superpose sur une bande, au moins un ruban de renfort comportant des fibres unidirectionnelles parallèles à l'axe longitudinal de la bande ;
- les fibres sont en carbone et la résine une résine époxy ;
- les mandrins sont obtenus à partir de matrice de section transversale en forme de Ω découpée en deux dans le plan de symétrie pour obtenir une section en forme de Z de la bande concernée. Dans le mode le plus habituel de réalisation, les angles entre les branches du Z sont droits.
- on réalise au moins trois couches successives desdites bandes composites.

L'invention propose également un dispositif de moulage d'un profil en matériau composite présentant un rayon de courbure non nul à partir d'au moins une bande composite s'étendant le long d'un axe longitudinal, caractérisé en ce que, la bande étant formée par l'empilage d'au moins deux nappes en fibres de renfort disposées selon des orientations différentes de l'axe longitudinal, les nappes étant pré imprégnées de résine et pré compactées l'une avec l'autre à une pression et une température déterminées, le dispositif comporte
au moins un premier mandrin souple en silicone,
des moyens de compactage sous vide à une première température, de ladite bande sur le premier mandrin pour lui donner la forme déterminée dudit mandrin,
un outillage métallique chauffé présentant en courbe la forme complémentaire du premier mandrin et formant le noyau d'un moule de mise en pression, agencé pour donner à ladite bande la forme de la pièce courbe recherchée,
des moyens de guidage et de présentation des ensemble mandrin et bande de forme complémentaire agencé pour déposer ladite bande en écartant les mandrins souples au fur et à mesure de la mise en forme de la première bande autour de l'outillage
des moyens de mise en pression et en température du moule sur l'ensemble ainsi obtenu pour polymérisation,
et des moyens de refroidissement avant extraction de la pièce ainsi formée après refroidissement.

Avantageusement la pièce étant réalisée à partir d'au moins deux bandes composites en fibres de renfort, à savoir une première bande et une deuxième bande, il comporte de plus un deuxième mandrin souple en silicone pour former la deuxième bande, et des moyens de dépose de la deuxième bande sur la première après retrait du premier mandrin en silicone.

Le deuxième mandrin est alors de forme complémentaire de celle de la deuxième bande, elle-même agencée pour s'emboîter sur la première bande, dont elle a la forme ici encore complémentaire, les deux bandes étant en contact l'une avec l'autre tout du long directement ou indirectement.

Egalement avantageusement le dispositif comporte de plus des moyens de dépose sur une bande, d'au moins un ruban comportant des fibres de renfort unidirectionnelles.

Dans d'autre mode de réalisation avantageux, on a recours aux dispositions suivantes :
- le dispositif comporte de plus des moyens de formation des bandes composites par superposition d'une troisième nappe sur les deux premières et d'application progressive de ladite troisième nappe pour l'agglomérer par compactage avec les autres, les fibres parallèles de chacune des dites nappes formant des angles entre elles respectivement de valeur 90°-a°, 90°, 90°+a°, avantageusement avec 10°<a<80°, par exemple a=30° ;
- l'outillage est de forme circulaire formant un carrousel mobile en rotation permettant la dépose successive des différents bande(s) et ruban(s) de renfort ;
- les moyens de guidage et de présentation des ensembles mandrin et bande de forme complémentaire comprennent des goulottes rectilignes ;
- les mandrins sont obtenus à partir de matrices de section transversale en forme de Ω découpées en deux dans le plan de symétrie pour obtenir une section en forme de Z de la bande concernée ;
- les mandrins sont obtenus à partir de matrices de sections transversales en forme de U découpées en deux dans le plan de symétrie pour obtenir une section en forme de L de la bande concernée.

L'invention sera mieux comprise à la lecture de la description qui suit de modes de réalisation donnés ci-après à titre d'exemple non limitatifs.

La description se réfère aux dessins qui l'accompagnent dans lesquels :
La figure 1 est une vue de dessus en perspective, d'un mode de réalisation d'empilement de nappes selon trois axes différents, pour former un semi-produit pour bandes du type utilisé avec l'invention.
La figure 2 montre la découpe de telles bandes en matériau composite, à partir du semi-produit décrit à la figure 1.
La figure 3 montre, en perspective, un mandrin en silicone symétrique de section transversale en forme de Ω, utilisé dans un mode de réalisation de l'invention plus particulièrement décrit ici, avec pré-drappage d'une bande sur la partie supérieure.
La figure 4 montre la mise en place et la formation de ladite bande de section en Ω sur le mandrin en silicone, par application et déformation sous vide.
La figure 5 montre la découpe de profils en Z à partir de la bande configurée de la figure 4.
La figure 6 est une vue schématique, partielle, d'un dispositif carrousel selon un mode de réalisation de l'invention, permettant la mise en place simultanée de deux bandes et de plusieurs rubans de renfort.
La figure 7 est une vue agrandie en perspective montrant la dépose en continu et la déformation en courbe d'une bande réalisée sur l'outillage métallique du carrousel de la figure 6, à l'aide d'un mandrin en silicone, selon un mode de réalisation de l'invention mettant en oeuvre une goulotte.
La figure 8 est une vue en perspective, tronquée selon VIII-VIII, de la goulotte de la figure 7.
La figure 9 montre, en perspective, une partie du dispositif de la figure 7, permettant d'obtenir par dépose de couches successives les profils montrés aux figures 10A et 10B à titre d'exemple.
La figure 11 montre en perspective et en coupe, de façon détaillée, un élément constitutif de l'outillage de la figure 6, faisant apparaître le contre-moule métallique pour cuisson sous pression de la pièce selon un mode de réalisation de l'invention.

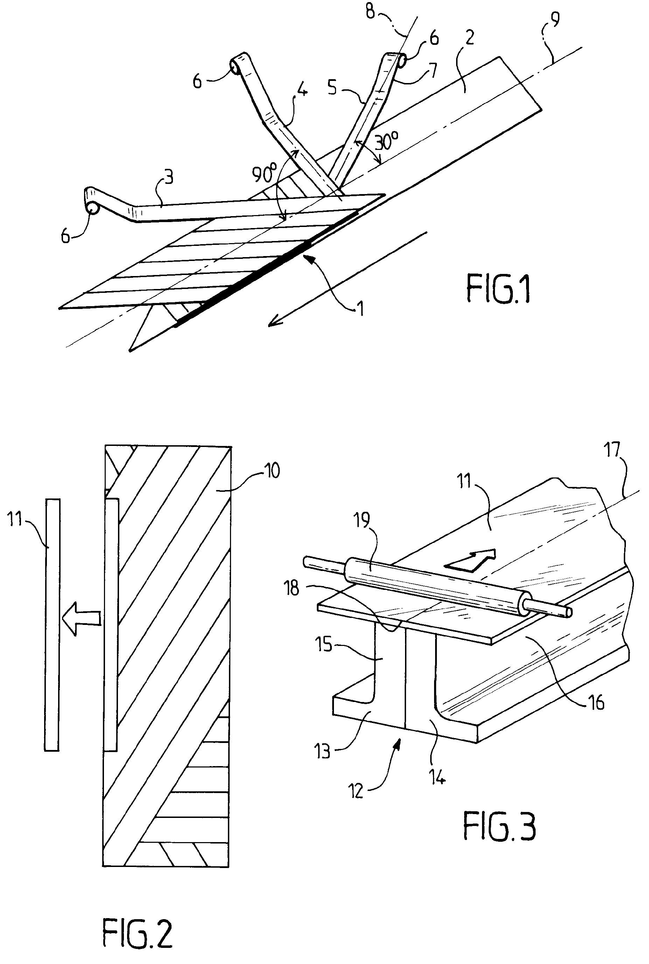

La figure 1 montre un mode de réalisation d'un exemple de semi-produit 1 permettant la confection d'une bande composite utilisée avec le procédé selon l'invention.

Le semi-produit 1 est ici obtenu par enroulements successifs autour d'un support rectangulaire 2, de trois nappes 3, 4 et 5, composées de fibres carbone unidirectionnelles dans le sens axial, pré-imprégnées de résine époxy, rectangulaires, identiques et dévidées en continu ou semi-continu à partir de rouleaux 6. Les fibres 7 sont situées dans le sens longitudinal 8 des nappes, leur angle d'enrobage étant différent, par exemple et comme représenté sur la figure 1, des angles respectivement de 30°, 90° et 120° avec l'axe 9 du support.

Il est ainsi formé un ruban de trois nappes superposées, dont les angles des fibres sont disposés selon des orientations différentes de celles de l'axe du ruban.

Le semi-produit 1 est ensuite compacté à une température et une pression absolue déterminées de façon à obtenir la plaque 10 de la figure 2, correspondant à une des faces du support 2.

La température et la pression déterminées vont dépendre, de façon connue en elle-même, à la fois de la résine utilisée, des fibres choisies, de la solidité et de la résistance du profil recherché après polymérisation, etc.

Avantageusement la pression du compactage peut, par exemple, être de l'ordre de 0,8 bar, par mise sous vide et plaquage des nappes l'une sur l'autre dans une enceinte correspondante, mais elle peut également être obtenue par pression externe dans une presse, ou par le biais d'un rouleau presseur à des pressions pouvant atteindre 3, 4 ou même 5 bars.

La température déterminée utilisée pour cette préparation des bandes multi-nappes est avantageusement une température supérieure à 40°C, ce qui permet une bonne polymérisation des résines.

Mais une température ambiante, de 15°C ou inférieure à 20°C est également possible.

A partir du ruban 10, des bandes 11 formées des nappes multi-directionnelles compactées sont extraites.

En référence à la figure 3, et dans le mode de réalisation plus particulièrement décrit ici, la bande 11 est alors drapée sur le mandrin ou gabarit 12, en matériau souple du type plastique ou caoutchouc semi-rigide, par exemple en silicone, de section transversale en forme de Ω.

Le mandrin 12 est formé par deux cornières 13, 14 à angle droit accolés par la face externe de leurs âmes respectives 15, 16.

Le profil en Ω peut donc être séparé en deux dans son plan de symétrie 17, pour obtenir des formes dont la section est en S ou en Z.

Par la suite, on utilisera les mêmes numéros de référence pour désigner des éléments identiques ou similaires.

En faisant référence aux figures 3, 4 et 5, on procède ensuite, et par exemple, comme suit :
- On applique tout d'abord longitudinalement la bande 11 sur la face supérieure plate 18 du Ω du mandrin 12.

Pour ce faire, on la presse progressivement, par exemple par l'intermédiaire d'un rouleau presseur 19, ou par tout autre moyen comme par le biais d'un rouleau progressivement déroulé sur lequel était embobiné la bande.

La pression peut être faible (quelques kilos). Elle permet de positionner correctement la bande et de la caler de façon symétrique sur le mandrin ou gabarit, qui est lui-même relativement souple mais suffisamment rigide pour permettre une telle application sans déformation.
- Dans un deuxième temps, et une fois la bande mise en place, on l'applique longitudinalement entièrement sur le gabarit par compactage sous vide, à la température déterminée de l'enceinte dans laquelle se déroule l'opération d'application (par exemple 20°C), pour lui donner la forme déterminée du gabarit, forme qui, à ce stade, ne présente donc pas de rayon de courbure.

Pour ce faire, et par exemple, on plaque sur la bande 11 une bâche 20, en toile de silicone ou en tout autre matériau souple et étanche, la toile étant montée dans un cadre sur charnière (non représenté).

Les opérations ci-dessus peuvent avantageusement se faire de façon automatique.

Puis on fait le vide dans l'espace interstitiel existant entre la bâche et la table support 21 sur laquelle est déposé le gabarit, l'étanchéité étant assurée tout du long par des joints 22.

La bâche en silicone vient alors comprimer la bande 11 et la contraint à épouser la forme du gabarit, par une action progressive de la face interne de la bâche sur la bande, et ce de façon homogène sur l'intégralité de la largueur du gabarit en silicone.

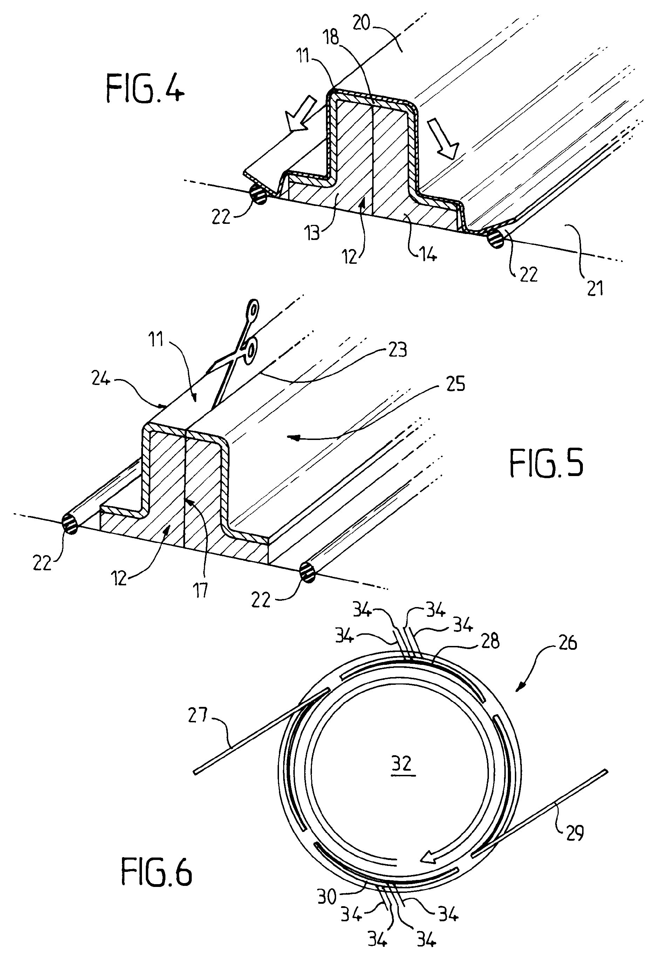

On obtient ainsi une déformation régulière de la bande prenant la forme en Ω recherchée, comme montré sur la figure 4.

Une fois la bâche 20 enlevée, et si le profil recherché est une profil en S ou Z, on coupe alors longitudinalement la nappe en deux le long de la ligne 23, dans le plan de séparation des deux cornières symétriques par rapport au plan 17.

On sépare ensuite les deux sous-préformes rectilignes 24 et 25, de section en Z, présentement identiques et symétriques.

La suite du procédé nécessite un moule 26, dont un exemple partiel de réalisation est représenté sur la figure 6.

Ce moule 26 permet par exemple le traitement simultané de plusieurs profils 27, 28, 29, 30, comme cela sera décrit ci-après.

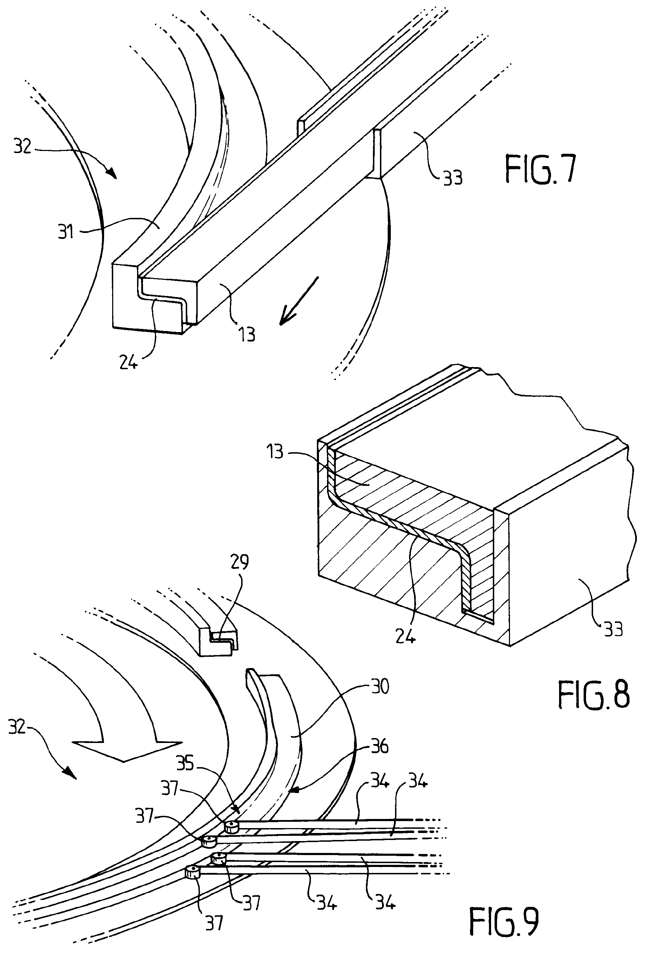

En référence à la figure 7, la bande 24 ainsi obtenue en forme de Z, est déposée avec son demi-gabarit 13 sur un outillage métallique 31 chauffé, présentant en coupe la forme complémentaire du gabarit et formant le noyau 32 du moule 26 (dont le couvercle n'est pas représenté).

L'outillage présente une forme courbe qui permet de donner à la bande en Z la courbure de la pièce recherchée, de façon régulière, autorisant un épanouissement progressif des fibres dans le sens transversal de la bande.

Le moule 26 de mise en pression et en température a par exemple une forme de carrousel, comme montré sur la figure 6.

Il permet d'effectuer en continu différentes phases de formation du profil de pièce recherchée et ensuite de cuire plusieurs pièces en même temps, par exemple les quatre quartiers d'une pièce circulaire ou ovale, de carlingue d'avion.

Dans le mode de réalisation plus particulièrement décrit ici le carrousel comporte quatre postes de dépose, qui peuvent donc se faire simultanément au fur et à mesure de sa rotation, en semi continu, ou en continu.

Un premier poste dépose, en la déformant, la bande 27, le mandrin en silicone souple se courbant simultanément sur l'outillage métallique 31 formé par une cornière chauffable, par exemple en acier.

Pour ce faire la bande 27 et son mandrin 13 sont présentés par une goulotte 33, fixe, rectiligne de section complémentaire à celle de l'ensemble bande+gabarit (cf. Figure 8).

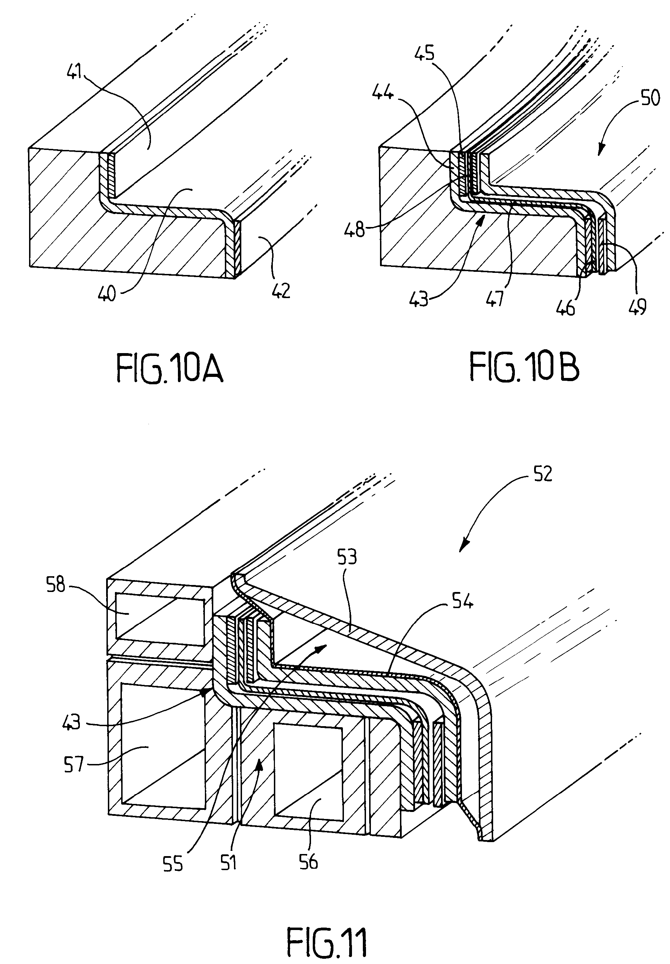

L'outillage métallique est quant-à-lui creux avec circulation d'eau, ce qui permet d'entretenir une température de dépose parfaitement contrôlée puis d'assurer les différentes variations de températures ultérieures, pour la polymérisation sous pression, comme cela sera décrit en référence à la figure 11.

Un deuxième poste identique, situé symétriquement de l'autre côté du carrousel circulaire, de dépose d'une deuxième bande 29 est prévu. La dépose est avantageusement automatisée, l'orientation et l'épanouissement des fibres pour épouser la courbe étant parfaitement homogènes, et régulièrement progressifs dans le sens transversal, grâce à la présence des gabarits en silicone.

Dans le mode de réalisation plus particulièrement décrit également en référence à la figure 9, on dépose de plus des rubans 34 de renfort sur les faces par exemple verticales 35, 36, des bandes profilées obtenues, en Z, par exemple sous forme de deux couches successives de rubans formés de fibres carbone unidirectionnelles d'axes parallèles à la courbe formée par l'outillage.

La dépose de rubans de nappes carbone unidirectionnelles est effectuée en une seule opération au fur et à mesure de la rotation du noyau 32 du moule 26, par pré-application d'une extrémité des rubans puis déroulement des rubans entraînés par friction lors de ladite rotation, à partir de rouleaux libres (non représentés) d'alimentation, un galet 37 de pressage permettant de limiter le foisonnement et de les mettre bien en place.

On peut lors de rotations supplémentaires du moule, déposer sur la première bande, une deuxième bande et/ou une troisième bande, de façon identique à la première, ces dernières étant configurées autour d'une deuxième ou d'un troisième mandrin identique au premier pour permettre les empilements successifs, de forme complémentaire.

On a représenté sur les figures 10A et 10B, des modes de réalisation de pièces selon l'invention, après élimination des mandrins.

La figure 10A montre un profil 40 en Z, comprenant deux rubans de renfort unidirectionnel 41 et 42 appliqués sur les faces d'extrémité verticale du Z.

La figure 10B montre quant-à-elle un profil 43, plus complexe, comprenant en sandwich, une première bande 44 en Z, deux rubans de renfort 45, 46 sur les parties d'extrémité, une deuxième bande 47 en Z, deux deuxièmes rubans de renfort 48, 49 et une troisième bande 50 en Z venant refermer entièrement le sandwich.

Chaque bande peut être constituée différemment à partir de deux, trois (ou plus) nappes orientées différemment.

Une fois la pièce ainsi conformée et épanouie de façon régulière, on met en place un outillage permettant la polymérisation sous pression à haute température.

On a représenté sur la figure 11 une vue en coupe, partiellement en perspective, du profil complexe 43 de la figure 10B en place sur la partie mâle 51 de l'outillage décrite ci-avant, appartenant au moule en carrousel.

Cette partie male 51 appartient au corps du moule et est fermée par un contre-moule métallique étanche 52 comportant une paroi externe 53 de protection et une bâche en silicone 54 qui va être mise sous pression dans l'espace 55 pour comprimer avec une pression de quelques bars (par exemple 3 bars) la pièce 43.

La partie mâle 51 comprend des canaux 56, 57, 58 de circulation d'eau à haute température dans l'outillage métallique tout du long de la pièce 43, grâce à un réseau d'alimentation en eau (non représenté).

Cette circulation, coordonnée avec les pressions exercées en 55 par un système de mise en compression commandé par automate, (non représenté) et connu en lui-même, permettent de réaliser les cycles de cuisson définis, qui sont eux-mêmes établis en fonction des caractéristiques de polymérisation de la pièce telles que recherchées et définies par les contraintes du cahier des charges de cette dernière.

Une fois la polymérisation réalisée, on refroidit la pièce ainsi fabriquée, de façon connue en faisant circuler de l'eau froide à l'intérieur du moule, en lieu et place de l'eau de chauffage.

A la fin du moulage et après refroidissement, la pièce est démoulée, détourée et contrôlée (ultrasons).

Comme il va de soi et comme il résulte également de ce qui précède, la présente invention n'est pas limitée aux modes de réalisation plus particulièrement décrits. Elle en embrasse au contraire toutes les variantes et notamment celles où plusieurs formes courbes sont obtenus avec la pièce, ce qui autorise de multiples configurations, plus ou moins complexes, avec ou non un ou des points d'inflexion, celles où les profils sont de sections variables et/ou de section de formes différentes sur leur longueur, celles où la ou les bandes utilisées sont seulement formées de deux nappes, ou encore de plus de trois nappes comprenant respectivement des fibres d'orientations différentes mais non parallèles à l'axe longitudinal de ladite bande.

## Revendications

1. Procédé de moulage d'une pièce courbe en matériau composite, tel que, à partir
d'au moins une bande (11) composite s'étendant le long d'un axe longitudinal (9) formée d'au moins deux nappes (3, 4, 5) en fibres de renfort unidirectionnelles disposées selon des orientations différentes de l'axe longitudinal, les nappes étant pré imprégnées de résine et pré compactées l'une avec l'autre à une pression et une température déterminées,
on applique longitudinalement la bande sur un mandrin (12) souple en silicone, par compactage sous vide à une deuxième température, pour lui donner la forme déterminée du mandrin,
on dépose ladite bande (11) ainsi obtenue sur un outillage métallique (31) chauffé présentant en courbe la forme complémentaire du mandrin et formant le noyau (32) d'un moule (26) de mise en pression et température, pour donner à la bande la forme de la pièce courbe recherchée, en enroulant le mandrin souple au fur et à mesure,
on retire le mandrin souple une fois la bande déposée en totalité,
puis on met en pression et en température le moule sur l'ensemble ainsi obtenu pour polymérisation,
et on extrait la pièce ainsi formée après refroidissement.

2. Procédé selon la revendication 1, **caractérisé en ce que** les fibres unidirectionnelles d'au moins deux des nappes (3, 5) sont symétriques par rapport à l'axe de la bande.

3. Procédé selon la revendication 2, **caractérisé en ce que** on forme la bande (11) composite à partir de trois nappes (3, 4, 5) superposées et agglomérées par compactage l'une à l'autre, les fibres parallèles de chacune des nappes formant un angle avec l'axe de la bande respectivement de valeur 90°-a°, 90°, 90°+a°.

4. Procédé selon l'une quelconque des revendications précédentes, **caractérisé en ce que**, la pièce étant réalisée à partir d'au moins deux bandes (11, 29) composites en fibres de renfort, à savoir une première bande (11) et une deuxième bande (29), formées respectivement sur un premier mandrin (12) souple en silicone et sur un deuxième mandrin (12) souple en silicone, et après dépose de la première bande sur ledit outillage et retrait du premier mandrin en silicone, on dépose la deuxième bande sur la première bande en enroulant à son tour le deuxième mandrin souple au fur et à mesure, avant de retirer le deuxième mandrin,
puis on met en pression et température pour moulage de la pièce courbe en matériau composite.

5. Procédé selon l'une quelconque des revendications précédentes, **caractérisé en ce que** on intercale entre deux bandes et/ou on superpose sur une bande, au moins un ruban (34) de renfort comportant des fibres unidirectionnelles parallèles à l'axe longitudinal de la bande.

6. Procédé selon l'une quelconque des revendications précédentes, **caractérisé en ce que** les fibres sont en carbone et la résine une résine époxy.

7. Procédé selon l'une quelconque des revendications précédentes, **caractérisé en ce que** les mandrins sont obtenus à partir de matrice de section transversale en forme de **Ω** découpée en deux dans le plan de symétrie pour obtenir une forme en Z de la bande concernée.

8. Procédé selon l'une quelconque des revendications précédentes, **caractérisé en ce que** on réalise au moins trois couches (44, 47, 50) successives desdites bandes composites.

9. Dispositif de moulage d'un profil en matériau composite présentant un rayon de courbure non nul à partir d'au moins une bande (11) composite s'étendant le long d'un axe longitudinal (9), tel que, la bande étant formée par l'empilage d'au moins deux nappes (3, 4, 5) en fibres de renfort disposées selon des orientations différentes de l'axe longitudinal, les nappes étant pré imprégnées de résine et pré compactées l'une avec l'autre à une pression et une température déterminées, le dispositif comporte :
au moins un premier mandrin (12) souple en silicone,
des moyens (20) de compactage sous vide à une première température, de ladite bande sur le premier mandrin pour lui donner la forme déterminée dudit mandrin,
un outillage métallique (31) chauffé présentant en courbe la forme complémentaire du premier mandrin et formant le noyau d'un moule (26) de mise en pression, agencé pour donner à ladite bande la forme de la pièce courbe recherchée,
des moyens (33) de guidage et de présentation des ensemble mandrin (12, 13, 14) et bande de forme complémentaire agencé pour déposer ladite bande en écartant les mandrins souples au fur et à mesure de la mise en forme de la première bande autour de l'outillage,
des moyens (52) de mise en pression et en température du moule sur l'ensemble ainsi obtenu pour polymérisation,
et des moyens (57) de refroidissement avant extraction de la pièce ainsi formée après refroidissement.

10. Dispositif selon la revendication 9, **caractérisé en ce que**, la pièce étant réalisée à partir d'au moins deux bandes (11, 29) composites en fibres de renfort, à savoir une première bande (11) et une deuxième bande (29), il comporte de plus un deuxième mandrin souple en silicone pour former la deuxième bande, et des moyens de dépose de la deuxième bande sur la première après retrait du premier mandrin en silicone.

11. Dispositif selon l'une quelconque des revendications 9 et 10, **caractérisé en ce que** il comporte de plus des moyens (37) de dépose sur une bande, d'au moins un ruban (34) comportant des fibres de renfort unidirectionnelles.

12. Dispositif selon l'une quelconque des revendications 10 et 11, **caractérisé en ce que** il comporte de plus des moyens de formation des bandes composites par superposition d'une troisième nappe sur les deux premières et d'application progressive de ladite troisième nappe pour l'agglomérer par compactage avec les autres, les fibres parallèles de chacune des dites nappes formant des angles entre elles respectivement de valeur 90°-a°, 90°, 90°+a°.

13. Dispositif selon l'une quelconque des revendications 9 à 12, **caractérisé en ce que** l'outillage (26) est de forme circulaire permettant la dépose successive des différentes bandes (11, 29 ; 44, 47, 50) et rubans (34) de renfort.

14. Dispositif selon l'une quelconque des revendications 9 à 13, **caractérisé en ce que** les moyens de guidage et de présentation des ensembles mandrin et bande de forme complémentaire comprennent des goulottes (33) fixes rectilignes.

15. Dispositif selon l'une quelconque des revendications 9 à 14, **caractérisé en ce que** les mandrins sont obtenus à partir de matrice en forme de **Ω,** ou de U découpée en deux dans le plan de symétrie pour obtenir une forme en Z, ou en L de la bande concernée.

## Patentansprüche

1. Verfahren zum Formen eines gebogenen Bauteils aus Verbundmaterial, bei dem ausgehend von mindestens einem, sich entlang einer longitudinalen Achse (9) erstreckenden Kompositband (11), welches von mindestens zwei Vliesen (3, 4, 5) aus unidirektionalen Verstärkungsfasern gebildet wird, welche gemäß unterschiedlicher Orientierungen der longitudinalen Achse angeordnet sind, wobei die Vliese mit Harz vorimprägniert sind und durch einen festgelegten Druck und Temperatur miteinander vorgepresst sind,
das Band longitudinal auf einen elastischen Dorn (12) aus Silikon durch Vakuumverdichtung bei einer zweiten Temperatur aufgebracht wird, um ihm die festgelegte Form des Dorns zu verleihen,
das so erhaltene Band (11) auf einem erwärmten metallischen Werkzeug (31) aufgebracht wird, welches eine zum Dorn komplementäre gebogene Form aufweist und den Kern (32) einer unter Druck zu setzenden und auf Temperatur zu bringenden Gießform (26) bildet, um dem Band die Form des gewünschten, gebogenen Bauteils zu verleihen, indem der elastische Dorn nach und nach gewickelt wird,
der elastische Dorn wird entfernt, wenn das Band vollständig aufgebracht ist,
dann über das so erzielte Ganze die Gießform zur Polymerisation unter Druck gesetzt und auf Temperatur gebracht wird,
und das so erzielte Bauteil nach Abkühlung entnommen wird.

2. Verfahren nach Anspruch 1, **dadurch gekennzeichnet, dass** die unidirektionellen Fasern von mindestens zwei der Vliese (3, 5) symmetrisch in Bezug auf die Achse des Bandes sind.

3. Verfahren nach Anspruch 2, **dadurch gekennzeichnet, dass** das Kompositband (11) aus drei Vliesen (3, 4, 5) gebildet wird, welche übereinander gelegt und durch gegenseitige Pressung zusammengeballt sind, wobei die parallelen Fasern jedes der Vliese jeweils einen Winkel mit der Achse des Bands mit dem Wert 90°-a°, 90°, 90°+a° einschließen.

4. Verfahren nach einem der vorhergehenden Ansprüche, **dadurch gekennzeichnet, dass**, während das Bauteil aus mindestens zwei Kompositbändern (11, 29) aus Verstärkungsfasern, nämlich einem ersten Band (11) und einem zweiten Band (29), welche jeweils auf einem ersten elastischen Dorn (12) aus Silikon und einem zweiten elastischen Dorn (12) aus Silikon geformt sind, hergestellt wird und nach Aufbringen des ersten Bands auf dem Werkzeug und Entfernen des ersten Dorns, das zweite Band auf das erste Band aufgebracht wird, indem seinerseits der zweite Dorn nach und nach abgewickelt wird, bevor der zweite Dorn entfernt wird,
dann für das Formen des gebogenen Bauteils aus Verbundmaterial Druck aufgebracht und Temperatur angelegt wird.

5. Verfahren nach einem der vorhergehenden Ansprüche, **dadurch gekennzeichnet, dass** mindestens ein Verstärkungsstreifen (34), welcher parallel zur longitudinalen Achse des Bands verlaufende, unidirektionale Fasern umfasst, zwischen zwei Bänder eingefügt wird und/oder auf ein Band aufgelegt wird.

6. Verfahren nach einem der vorhergehenden Ansprüche, **dadurch gekennzeichnet, dass** die Fasern aus Karbon bestehen und das Harz ein Epoxydharz ist.

7. Verfahren nach einem der vorhergehenden Ansprüche, **dadurch gekennzeichnet, dass** die Dorne aus einer Matrize mit einem Querschnitt in der Form eines Ω, welche in der Symmetrieebene halbiert wird, erzielt werden, um die Form eines Z des betreffenden Bands zu erzielen.

8. Verfahren nach einem der vorhergehenden Ansprüche, **dadurch gekennzeichnet, dass** mindestens drei aufeinander folgende Schichten (44, 47, 50) der Kompositbänder verwirklicht werden.

9. Vorrichtung zum Formen eines Profils aus Verbundmaterial, welches einen Krümmungsradius ungleich Null aufweist, ausgehend von mindestens einem Kompositband (11), welches sich entlang einer longitudinalen Achse (9) erstreckt, bei der das Band durch Stapelung von mindestens zwei Vliesen (3, 4, 5) aus Verstärkungsfasern gebildet wird, welche gemäß unterschiedlicher Orientierungen der longitudinalen Achse angeordnet sind, wobei die Vliese mit Harz vorimprägniert sind und durch einen festgelegten Druck und Temperatur miteinander vorgepresst sind, wobei die Vorrichtung Folgendes umfasst:
mindestens einen ersten, elastischen Dorn (12) aus Silikon,
Mittel (20) zur Vakuumverdichtung bei einer ersten Temperatur des Bands auf dem ersten Dorn, um ihm die festgelegte Form des Dorns zu verleihen,
ein erwärmtes, metallisches Werkzeug (31), welches eine zum Dorn komplementäre gebogene Form aufweist und den Kern einer unter Druck zu setzenden Gießform (26) bildet, welche eingerichtet ist, um dem Band die Form des gewünschten, gebogenen Bauteils zu verleihen,
Mittel (33) zur Führung und Darstellung der Gesamtheit aus Dorn (12, 13, 14) und Band in komplementärer Form, welche eingerichtet sind, um das Band aufzubringen, indem die elastischen Dorne je nach dem in Form bringen des ersten Bandes um das Werkzeug herum entfernt werden,
Mittel (52) zum unter Druck setzen und auf Temperatur bringen der Gießform über die so erzielte Gesamtheit zur Polymerisation,
und Mittel (57) zur Abkühlung vor der Entnahme des nach Abkühlung so geformten Bauteils.

10. Vorrichtung nach Anspruch 9, **dadurch gekennzeichnet, dass**, während das Bauteil aus mindestens zwei Kompositbändern (11, 29) aus Verstärkungsfasern, nämlich einem ersten Band (11) und einem zweiten Band (29) hergestellt wird, sie außerdem einen zweiten elastischen Dorn aus Silikon, um das zweite Band zu formen, und Mittel zum Aufbringen des zweiten Bands auf das erste umfasst, nachdem der erste Dorn aus Silikon entfernt wurde.

11. Vorrichtung nach einem der Ansprüche 9 und 10, **dadurch gekennzeichnet, dass** sie außerdem Mittel (37) zum Aufbringen mindestens eines unidirektionale Verstärkungsfasern umfassenden Streifens (34) auf ein Band.

12. Vorrichtung nach einem der Ansprüche 10 und 11, **dadurch gekennzeichnet, dass** sie außerdem Mittel zur Bildung von Kompositbändern durch Überlagerung eines dritten Vlieses über die ersten zwei und zum stufenweise Aufbringen des dritten Vlieses umfasst, um es durch Pressung mit den anderen zusammen zu ballen, wobei die parallelen Fasern jedes der Vliese mit der Achse des Bands jeweils Winkel mit dem Wert 90°-a°, 90°, 90°+a° einschließen.

13. Vorrichtung nach einem der Ansprüche 9 bis 12, **dadurch gekennzeichnet, dass** das Werkzeug (26) von kreisförmiger Form ist, welche das schrittweise Aufbringen der verschiedenen Bänder (11, 29; 44, 47, 50) und Verstärkungsstreifen (34) ermöglicht.

14. Vorrichtung nach einem der Ansprüche 9 bis 13, **dadurch gekennzeichnet, dass** die Mittel zur Führung und Darstellung der Baugruppen aus Dorn und Band in komplementärer Form feste, geradlinige Rinnen (33) aufweisen

15. Vorrichtung nach einem der Ansprüche 9 bis 14, **dadurch gekennzeichnet, dass** die Dorne aus einer Matrize in der Form eines Ω oder eines U, welche in der Symmetrieebene halbiert wird, erzielt werden, um die Form eines Z oder eines L des betreffenden Bands zu erzielen.

## Claims

1. Method for moulding a curved component in composite material such as from at least one composite strip (11) extending along a longitudinal axis (9) formed of at least two plies (3, 4, 5) of unidirectional reinforcing fibres laid in orientations different from the longitudinal axis, the plies being pre-impregnated with resin and precompacted with one another at a determined pressure and a determined temperature,
the strip is applied longitudinally to a flexible silicone mandrel (12), by vacuum compaction at a second temperature, in order to confer upon it the determined shape of the mandrel,
the said strip (11) thus obtained is laid onto a heated metallic tool (31) which has, in curved form, the shape that complements the mandrel and forms the core (32) of a mould (26) for applying a pressure and temperature so as to impart to the strip the shape of the desired curved component by gradually wrapping the flexible mandrel around it,
the flexible mandrel is removed once the strip has been fully laid,
then pressure and temperature are applied to the mould over the assembly thus obtained for polymerization,
and the component thus formed is extracted after cooling.

2. Method according to Claim 1, **characterized in that** the unidirectional fibres of at least two of the plies (3, 5) are symmetric about the axis of the strip.

3. Method according to Claim 2, **characterized in that** the composite strip (11) is formed from three plies (3, 4, 5) that are superposed and consolidated by compaction with one another, the parallel fibres in each of the plies forming an angle of value 90°-a°, 90°, 90°+a° respectively with the axis of the strip.

4. Method according to any one of the preceding claims, **characterized in that**, with the component being made from at least two composite strips (11, 29) of reinforcing fibres, namely a first strip (11) and a second strip (29) which are respectively formed on a first flexible silicone mandrel (12) and on a second flexible silicone mandrel (12), and after the first strip has been laid on the said tool and removed from the first silicone mandrel, the second strip is laid on the first strip by gradually wrapping the second flexible mandrel in its turn before removing the second mandrel,
then pressure and temperature are applied for moulding the curved component in composite material.

5. Method according to any one of the preceding claims, **characterized in that** at least one reinforcing tape (34) comprising unidirectional fibres parallel to the longitudinal axis of the strip is interposed between two strips and/or superposed on a strip.

6. Method according to any one of the preceding claims, **characterized in that** the fibres are carbon fibres and the resin is an epoxy resin.

7. Method according to any one of the preceding claims, **characterized in that** the mandrels are obtained from dies of Ω-shaped cross section, cut into two along the plane of symmetry in order to obtain a Z-shape of the relevant strip.

8. Method according to any of one of the preceding claims, **characterized in that** at least three successive layers (44, 47, 50) of the said composite strips are produced.

9. Device for moulding a profile section made of composite material having a non-zero radius of curvature using at least one composite strip (11) extending along a longitudinal axis (9), such that with the strip being formed by the stack of at least two plies (3, 4, 5) of reinforcing fibres laid in orientations different from the longitudinal axis, the plies being pre-impregnated with resin and precompacted with one another at a determined pressure and a determined temperature, the device comprises:
at least a first flexible silicone mandrel (12),
means (20) for the vacuum compaction at a first temperature of the said strip on the first mandrel in order to impart the determined shape of the said mandrel to it,
a heated metal tool (31) which has in curved form the shape that complements the first mandrel and forms the core of a pressurizing mould (26), designed to impart to the said strip the shape of the desired curved component,
means (33) for guiding and offering up the assemblies of mandrel (12, 13, 14) and strip of complementary shape designed to lay the said strip by moving the flexible mandrels away gradually in pace with the shaping of the first strip around the tool,
means (52) for applying pressure and temperature to the mould over the assembly thus obtained for polymerization,
and means (57) of cooling the component thus formed before it is extracted after cooling.

10. Device according to Claim 9, **characterized in that**, with the component being produced from at least two composite strips (11, 29) of reinforcing fibres, namely a first strip (11) and a second strip (29), it additionally comprises a second flexible silicone mandrel to form the second strip, and means of laying the second strip on top of the first after the first silicone mandrel has been removed.

11. Device according to either one of Claims 9 and 10, **characterized in that** it additionally comprises means (37) of laying over a strip at least one tape (34) comprising unidirectional reinforcing fibres.

12. Device according to either one of Claims 10 and 11, **characterized in that** it additionally comprises means of forming composite strips by superposing a third ply on top of the first two and progressively applying the said third ply in order to consolidate it with the others by compaction, the parallel fibres in each of the said plies forming angles of value 90°-a°, 90°, 90°+a° respectively with one another.

13. Device according to any one of Claims 9 to 12, **characterized in that** the tool (26) is of circular shape allowing the various strips (11, 29; 44, 47, 50) and reinforcing tapes (34) to be laid in succession.

14. Device according to any one of Claims 9 to 13, **characterized in that** the means for guiding and offering the assemblies of mandrel and strip of complementary shape comprise fixed rectilinear chutes (33).

15. Device according to any one of Claims 9 to 14, **characterized in that** the mandrels are obtained from Ω-shaped or U-shaped dies cut into two along the plane of symmetry in order to obtain a Z-shape or L-shape of the relevant strip.
